(19) Europäisches Patentamt / European Patent Office / Office européen des brevets

(11) **EP 3 885 124 B1**

(12) **EUROPEAN PATENT SPECIFICATION**

(45) Date of publication and mention of the grant of the patent:
**18.06.2025 Bulletin 2025/25**

(21) Application number: **21153505.9**

(22) Date of filing: **26.01.2021**

(51) International Patent Classification (IPC):
**B32B 3/12** *(2006.01)*　　**B32B 3/26** *(2006.01)*
**B32B 5/02** *(2006.01)*　　**B32B 5/18** *(2006.01)*
**B32B 27/40** *(2006.01)*　　**B32B 38/00** *(2006.01)*
**B60R 5/04** *(2006.01)*　　**B60R 13/08** *(2006.01)*

(52) Cooperative Patent Classification (CPC):
**B32B 3/12; B32B 3/266; B32B 5/02; B32B 5/18;**
**B32B 27/40; B32B 37/146; B32B 38/04;**
**B60R 13/011; B60R 13/08;** B32B 2038/047;
B32B 2262/101; B32B 2307/102; B32B 2605/08

(54) **METHOD OF MANUFACTURING SOUND ABSORBING BOARD USING HONEYCOMB AND SOUND ABSORBING BOARD USING HONEYCOMB MANUFACTURED USING THE SAME**

VERFAHREN ZUR HERSTELLUNG EINER SCHALLABSORBIERENDEN PLATTE UNTER VERWENDUNG VON WABEN UND SCHALLABSORBIERENDE PLATTE MIT DURCH DIESES VERFAHREN HERGESTELLTEN WABEN

PROCÉDÉ DE FABRICATION D'UN PANNEAU D'ABSORPTION SONORE UTILISANT DES NIDS D'ABEILLES ET PANNEAU D'ABSORPTION SONORE UTILISANT DES NIDS D'ABEILLES FABRIQUÉ SELON CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2020 KR 20200035366**

(43) Date of publication of application:
**29.09.2021 Bulletin 2021/39**

(73) Proprietor: **Daesol Ausys Co., Ltd.**
**Namdong-gu**
**Incheon 21629 (KR)**

(72) Inventors:
• **KWON, Min Ho**
　**Namdong-gu, Incheon 21629 (KR)**
• **NAMGUNG, Jaekyun**
　**Namdong-gu, Incheon 21629 (KR)**

(74) Representative: **Cavattoni, Raimondi & Luppi Srl**
**Viale dei Parioli, 160**
**00197 Rome (IT)**

(56) References cited:
**EP-A1- 3 477 628**　　**KR-A- 20180 107 424**
**US-A1- 2017 225 425**

**Description**

Background

Field of the Invention

The present disclosure relates to a method of manufacturing a sound absorbing board using a honeycomb and a sound absorbing board using a honeycomb manufactured using the same, and more particularly, to forming a perforation through which optimal sound absorption performance is obtained by calculating a sound absorption coefficient in advance according to the diameter of the perforation that is formed to pass through a polyurethane sheet. Accordingly, a sound absorbing board even having the same or similar sound absorption performance and having a smaller thickness as compared to a sound absorbing board according to the related art can be manufactured.

Discussion of Related Art

In general, boards used while objects are placed thereon, such as sound absorbing boards installed in a trunk of a vehicle or the like, are configured to support the load of the objects even while having sound absorption performance by itself. To this end, sound absorbing boards are manufactured in a multi-layered structure or are made in a honeycomb structure that not only can reinforce structural rigidity, but also is lightweight and can be easily manufactured and used.

US 2017225425 A1 discloses a load floor having sound absorption and insulation performances for a vehicle, including: a honeycomb structure manufactured in a sheet form; two glass mesh mats respectively installed on both side surfaces of the honeycomb structure; polyurethane sheets formed of a hard material and respectively provided to overlap the glass mesh mats; and two wall papers respectively provided to overlap the polyurethane sheets, wherein punched holes having a predetermined gap may be formed in at least one of the polyurethane sheets, wherein the punched hole may have a diameter in a range of 2 to 4 mm.

According to US 2017225425 A1, noise of a specific frequency band that enters into a trunk and is different according to a model of a vehicle can be removed through changing the number of gaps between and the diameter of the punched holes in the polyurethane sheets.

KR 2018 0107424 discloses a method of forming an undercover for a vehicle using a honeycomb according by sequentially stacking polyurethane foam and glass mat on both sides of a honeycomb structure, and forming a plurality of through holes in the polyurethane foam and the glass mat provided on the opposite side so as to communicate with the honeycomb structure.

Further examples of the prior art are disclosed in Patent Document 1 to Patent Document 3.

*Patent Document 1:* Korean Patent Application Publication No. 10-2017-0093423

An objective of this invention is to provide a luggage board for a vehicle having sound absorption and insulation performance, in which since the luggage board is manufactured by producing a honeycomb structure using paper and adding polyurethane sheets to both surfaces thereof, lightweightness, sufficient structural rigidity, and a sound absorption effect can be obtained through the honeycomb structure, and the polyurethane sheet is formed on each of the both surfaces of the honeycomb structure so that a sound absorption and insulation effect can be further improved. Further, another objective of this invention is to provide a luggage board for a vehicle, in which since a plurality of perforations are formed in at least one of the two polyurethane sheets, the non-perforated polyurethane sheet blocks external noise introduced from the outside of a vehicle, sounds are absorbed through the perforated polyurethane sheet and the honeycomb structure, and thus the sound absorption and insulation performance can be improved. In particular, still another objective of this invention is to provide a luggage board for a vehicle having sound absorption and insulation performance, in which a frequency range of other specific bands which enter a trunk from the outside of the trunk for each vehicle model can be removed through the number of perforations, an interval between the perforations, and the diameter of respectively provided to overlap the glass mesh mats; and two wall papers respectively provided to overlap the polyurethane sheets, wherein punched holes having a predetermined gap may be formed in at least one of the polyurethane sheets, wherein the punched hole may have a diameter in a range of 2 to 4 mm.

According to US 2017225425 A1, noise of a specific frequency band that enters into a trunk and is different according to a model of a vehicle can be removed through changing the number of gaps between and the diameter of the punched holes in the polyurethane sheets.

KR 2018 0107424 discloses a method of forming an undercover for a vehicle using a honeycomb according by sequentially stacking polyurethane foam and glass mat on both sides of a honeycomb structure, and forming a plurality of through holes in the polyurethane foam and the glass mat provided on the opposite side so as to communicate with the honeycomb structure.

Further examples of the prior art are disclosed in Patent Document 1 to Patent Document 3.

Patent Document 1: Korean Patent Application Publication No. 10-2017-0093423

An objective of this invention is to provide a luggage board for a vehicle having sound absorption and insulation performance, in which since the luggage board is manufactured by producing a honeycomb structure using paper and adding polyurethane sheets to both surfaces thereof, lightweightness, sufficient structural rigidity, and a sound absorption effect can be obtained through the honeycomb structure, and the polyurethane sheet is formed on each of the both surfaces of the honeycomb structure so that a sound absorption and insulation effect can be further improved. Further, another objective of this invention is to provide a luggage board for a vehicle, in which since a plurality of perforations are formed in at least one of the two polyurethane sheets, the non-perforated polyurethane sheet blocks external noise introduced from the outside of a vehicle, sounds are absorbed through the perforated polyurethane sheet and the honeycomb structure, and thus the sound absorption and insulation performance can be improved. In particular, still another objective of the perforations, and thus optimal noise improvement performance can be obtained depending on the vehicle model.

Patent Document 2: Korean Patent No. 10-1952485

This invention relates to a sandwich panel for a luggage board of a vehicle and a method of manufacturing the same, in which as first and second bonding reinforcement layers are formed between first and second skin layers and a core layer, and an adhesive force between the first and second skin layers and the core layer is improved to prevent the first and second skin layers and the core layer from peeling, the lifetime of the luggage board is increased so that maintenance costs are reduced, and as the first and second rigidity reinforcement layers and the support part aim to reduce the weight of the sandwich panel for a luggage board while reinforcing the rigidity, the safety and reliability of the vehicle can be improved, fuel efficiency of the vehicle can be enhanced, and user convenience can be achieved.

Patent Document 3: Korean Patent No. 10-2073212

This invention relates to a luggage board for a vehicle and relates to a luggage board for a vehicle, which is installed in a trunk of a vehicle as one of the interior panels for the vehicle. Such a luggage board for a vehicle includes: a lower panel installed in the trunk of the vehicle; a raising and lowering panel located on the lower panel; and an a raising and lowering device that raises and lowers the raising and lowering panel, wherein each of the lower panel and the raising and lowering panel includes a paper honeycomb member, chop mats laminated on both surfaces of the honeycomb member, polyurethane layers foam-molded on the surfaces of the chop mats, and surface materials adhering to the surfaces of the polyurethane layers.

However, in order to improve sound absorption performance, a sound absorbing board used for the existing luggage board or the like is made of, in addition to the honeycomb, various materials such as a natural fiber reinforced board, melt-blown polypropylene (PP), and a bubble sheet used for suppressing the dissipation of hydration heat generated inside poured concrete when the concrete is curing while the surface of the concrete is covered. Accordingly, the following problems occur.

(1) Since the frequency band generated in a trunk part varies depending on the vehicle model and the manufacturing company thereof, it is difficult to manufacture a sound absorbing board having sound absorbing performance suitable for such a frequency band.

(2) In particular, in order to obtain noise performance in accordance with a wide frequency band, the thickness of the sound absorbing board increases and the weight thereof also increases. This acts as a factor that not only reduces space utilization in a limited space, but also lowers fuel efficiency of the vehicle.

Related Art

Patent Document

Patent Document 1) Korean Patent Application Publication No. 10-2017-0093423 (published on: August 16, 2017)
Patent Document 2) Korean Patent No. 10-1952485 (registered on: February 20, 2019)
Patent Document 3) Korean Patent No. 10-2073212 (registered on: January 29, 2020)

Summary of the invention

In consideration of the above problems, an objective of the present disclosure is to provide a method of manufacturing a sound absorbing board using a honeycomb and a sound absorbing board using a honeycomb manufactured using the same, in which when a sound absorbing board, which manufactured by laminating glass fiber mats on both sides of a honeycomb structure that is light and has structural rigidity and foaming polyurethane sheets, is manufactured, a sound absorption coefficient is calculated using the diameter, the number, and the porosity of perforations, and the perforations having a diameter at which a sound absorption effect is obtained in a predetermined frequency band are formed in the polyurethane sheets, thereby further improving sound absorption performance in the predetermined frequency band and reducing the weight by making the thickness of the sound absorbing board small.

To achieve the objective, a method of manufacturing a sound absorbing board using a honeycomb, in which the sound absorbing board is formed by laminating glass fiber mats (20) on both surfaces of the honeycomb (10) and foam-molding polyurethane sheets (30) on surfaces, which are exposed to the outside, of the glass fiber mats (20) according to the present disclosure, includes: a first step of setting a frequency band; a second step of setting the cell size (S) and the thickness (t) of the honeycomb (10); a third step of setting a range of the thickness (t) of the polyurethane sheets (30), a range of the diameter d of perforations (31) to be formed in the polyurethane sheets (30), and the porosity of the perforations (31); a fourth step of obtaining a sound absorption coefficient according to a frequency change by calculating an inherent acoustic impedance of the perforations (31) using variables in the third step while at least the diameter (d) among the thickness (t) of the polyurethane sheets (30) and the diameter (d) of the perforations (31) is input differently; and a fifth step of marking positions of the perforations (31) in the polyurethane sheets (30) with at least one diameter d of the perforations (31) at which the sound absorption coefficient is high in the frequency band set in the first step among sound absorption coefficients obtained in the fourth step.

The honeycomb (10) may be made of paper, aluminum, or synthetic resin.

The cell size (S) may be in the range of 5 mm to 15 mm.

The glass fiber mats (20) may have a surface density of 150 $g/m^2$ to 1,500 $g/m^2$.

The polyurethane sheets (30) may have a surface density of 150 $g/m^2$ to 1,500 $g/m^2$.

The diameter (d) of the perforations (31) may be in the range of 0.2 mm to 4 mm.

An interval between the perforations (31) may be the same as the cell size (S).

The present disclosure includes a sound absorbing board using a honeycomb, which is manufactured by perforating the polyurethane sheets (30) with the marked diameter (d) of the perforations (31) in the above-described method of manufacturing a sound absorbing board using a honeycomb.

The perforations (31) may be formed using a laser, a roller or press equipped with several needles, or needles equipped with a servo or cylinder.

The sound absorbing board using a honeycomb may be a luggage board for a vehicle.

Brief description of the drawings

The above and other objects, features and advantages of the present disclosure will become more apparent to those of ordinary skill in the art by describing exemplary embodiments thereof in detail with reference to the accompanying drawings, in which:

FIG. 1 is a side view illustrating a vehicle in a state in which a sound absorbing board according to the present disclosure is used as a luggage board;

FIG. 2 is an exploded perspective view illustrating a configuration of the sound absorbing board according to the present disclosure;

FIG. 3 is a flowchart for describing a method of manufacturing a sound absorbing board using a honeycomb according to the present disclosure;

FIG. 4 shows views illustrating the honeycomb according to the present disclosure, in which FIG. 4A is a perspective view and FIG. 4B is a plan view;

FIG. 5 is a plan view of the sound absorbing board for illustrating a perforated state according to the present disclosure;

FIG. 6 is a diagram for describing Rao & Munjal's impedance model;

FIG. 7 is an exemplary graph illustrating a result of calculating a sound absorption coefficient through input of a variable using the method of manufacturing a sound absorbing board using a honeycomb according to the present disclosure;

FIG. 8 is a picture of a luggage board of a vehicle which is actually used to compare the sound absorption coefficients of three types of luggage boards having different thicknesses according to a frequency change;

FIG. 9 is a graph illustrating sound absorption coefficients according to an example in which the luggage board of FIG. 8 is perforated and a comparative example in which the luggage board of FIG. 8 is not perforated;

FIG. 10 is a graph illustrating the sound absorption coefficient according to the example in which the luggage board of FIG. 8 is perforated;

FIG. 11 is a graph illustrating sound absorption performance according to the frequency change in a state in which the sound absorbing board according to the present disclosure is actually mounted in the vehicle;

FIG. 12 is a graph illustrating the sound absorption coefficient performance measured in a state in which the luggage board according to the present disclosure is actually mounted in the vehicle and illustrating the sound absorption coefficient according to the example in which the sound absorbing board is perforated and the comparative example in which the sound absorbing board is not perforated;

FIG. 13 is a graph illustrating the sound absorption coefficient performance measured in a state in which the luggage board according to the present disclosure is actually mounted in the vehicle and is a graph illustrating examples where the perforations are formed with three diameters; and

FIG. 14 is a picture illustrating the sound absorbing board perforated with two diameters according to the present disclosure and illustrating an example where the diameter of a small perforation is 1 mm and the diameter of a large perforation is 1.5 mm.

Detailed description of exemplary embodiments

Hereinafter, exemplary embodiments of the present disclosure will be described in more detail with reference to the accompanying drawings. Prior to this, terms or words used in the present specification and the appended claims should not be interpreted as being limited to usual or dictionary meanings and should be interpreted as meanings and concepts corresponding to the technical spirit of the present disclosure according to the principle that the inventor may properly define the concepts of the terms in order to describe his/her own invention in the best way.

Thus, since the embodiments described in the present specification and configurations illustrated in the drawings are merely the most exemplary embodiments of the present disclosure and do not represent all the technical spirit of the present disclosure, it should be understood that various equivalents and variations that may replace the embodiments and the configurations are present at filling of the present application.

Manufacturing method

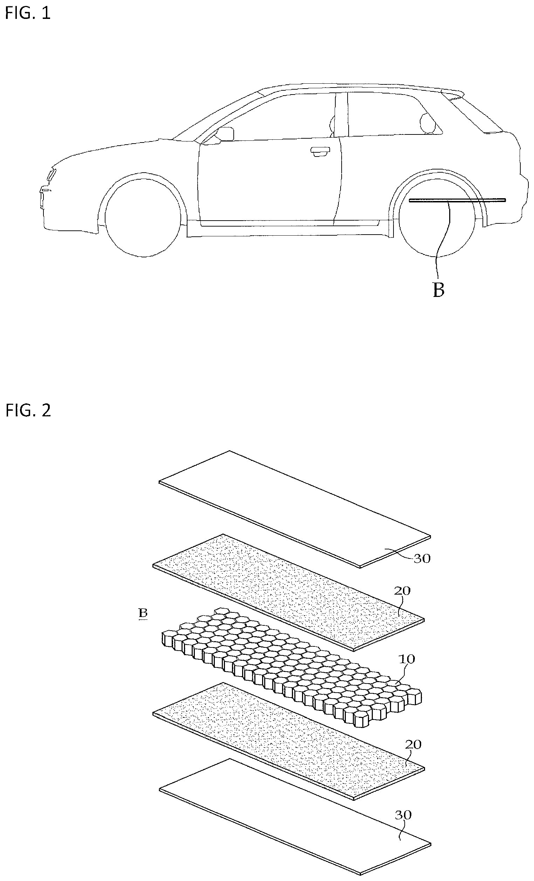

As illustrated in FIGS. 1 to 14, the objective of a manufacturing method according to the present disclosure is to perforate polyurethane sheets 30 to achieve optimal sound absorption performance in a set frequency band when a sound absorbing board B formed by laminating glass fiber mats 20 on both surfaces of a honeycomb 10 and foam-molding the polyurethane sheets 30 on the surfaces of the glass fiber mats 20, the surfaces being exposed to the outside, is designed.

In this case, a sound absorption coefficient is calculated using a cell size S and a thickness T of a cell 11 of the honeycomb 10, the number, a diameter d, and the porosity of perforations 31 formed in the polyurethane sheets 30 to pass through the cell 11, a position having excellent sound absorption performance in a preset frequency band is perforated, and thus the sound absorption performance can be optimized. In this case, the perforations 31 are designed to have the same diameter d or at least two types of perforations 31 having different diameters are designed in some cases, and thus the optimal sound absorption performance can be obtained in the preset frequency band.

Hereinafter, these configurations will be described in more detail with reference to the accompanying drawings. Here, since the manufacturing method includes five steps, the manufacturing method will be described in detail for each step. Here, the sound absorbing board may be used wherever sound absorption performance and structural rigidity are required. However, here, an example of the sound absorbing board used as a luggage board will be described.

A. First step

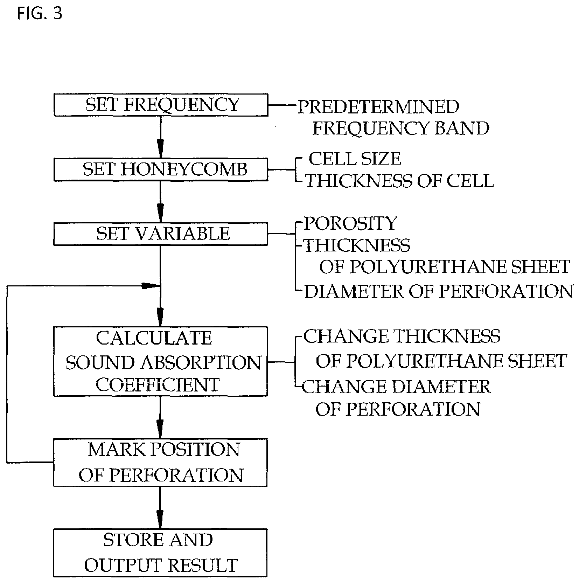

A first step is a step of setting a frequency band as illustrated in FIG. 3. That is, since a frequency band varies depending on a place where the sound absorbing board B manufactured according to the present disclosure is to be used, the frequency band for enhancing a sound absorption effect is set among frequency bands generated at the place of use. For example, when the sound absorbing board B is applied to and used in a trunk lid, a frequency band to be removed among frequencies generated in a trunk is the same or similar when the vehicle model is the same but is different when the vehicle model is different. Thus, in this way, the frequency band for obtaining the sound absorption effect in the other frequency bands is set so that the sound absorption performance obtained as the perforations 31, which will be described below, are formed is optimized in this frequency band.

B. Second step

A second step is a step of setting a cell size S and a thickness T of the honeycomb 10 as illustrated in FIGS. 2 to 4.

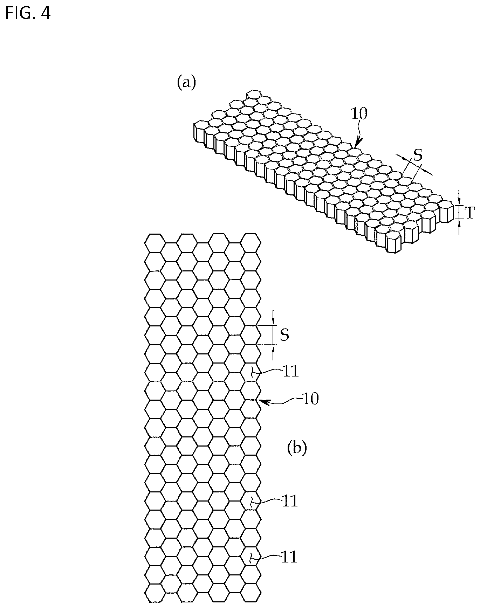

This is a step of setting the size and the height of each cell 11 constituting the honeycomb 10. Here, as illustrated in FIG. 4, the cell size S represents a length between facing sides of the cell 11, and the thickness T of the cell 11 represents the thickness of the honeycomb 10.

This is for determining the structural rigidity, the thickness of the sound absorbing board B, and the like, which are required in the place of use, by limiting the size and the thickness of the cell 11 of the honeycomb 10 to be used in the sound absorbing board B according to the present disclosure. For example, as the thickness of the sound absorbing board B used for the luggage board is limited, the thickness T of the honeycomb 10 constituting the sound absorbing board B is also limited. Thus, in the second step, the cell size S and the thickness T are set such that the honeycomb 10 is configured to have a thickness T that meets a constraint having occurred in this way. Further, the cell size S is used as an interval between adjacent perforations 31 when the perforations 31, which will be described below, are formed.

Meanwhile, in the exemplary embodiments of the present disclosure, although the honeycomb 10 may be made of various materials and used, it is preferable that the honeycomb 10 is manufactured using paper, aluminum, or synthetic resin that is light, is easily formed and may be manufactured and used in a desired size.

Further, in the exemplary embodiments of the present disclosure, it is preferable that the cell size S is in the range of 5 mm to 15 mm. This is for obtaining sufficient sound absorption performance in a specific frequency band, for example, medium frequency pattern noise (800 Hz), through an inner space of each cell 11 without weakening the structural rigidity of the honeycomb 10.

C. Third step

In a third step, as illustrated in FIGS. 3 and 4, the range of the thickness t of the polyurethane sheet 30, the range of the diameter d of the perforation 31 formed in the polyurethane sheet 30, and the porosity of the perforations 31 are set.

This is for calculating the sound absorption coefficient in a fourth step which will be described below. In particular, it is preferable that by setting the thickness t of the polyurethane sheet 30 and the diameter d of the perforation 31 to a certain range, when the sound absorption coefficient is calculated in the fourth step, the optimal sound absorption coefficient may be calculated while changing the thickness t and the diameter d. For example, it is preferable that the diameter d of the perforation 31 is in the range of 0.2 mm to 4 mm. As described above, this is for further increasing the sound absorption effect by dissipating incident sound energy into thermal energy in each perforation 31 as at least one perforation 31 having a small diameter d is formed in the cell 11 corresponding to one space. In this case, it is preferable that an interval between adjacent perforations 31 is formed to have the cell size S of the cells 11 constituting the honeycomb 10.

D. Fourth step

A fourth step is a step of calculating and obtaining the sound absorption performance, as illustrated in FIGS. 3, 5, and 6. The sound absorption performance in this case is obtained through an inherent acoustic impedance of the perforation 31 used for calculating the sound absorption coefficient based on the variables input in the above-described steps.

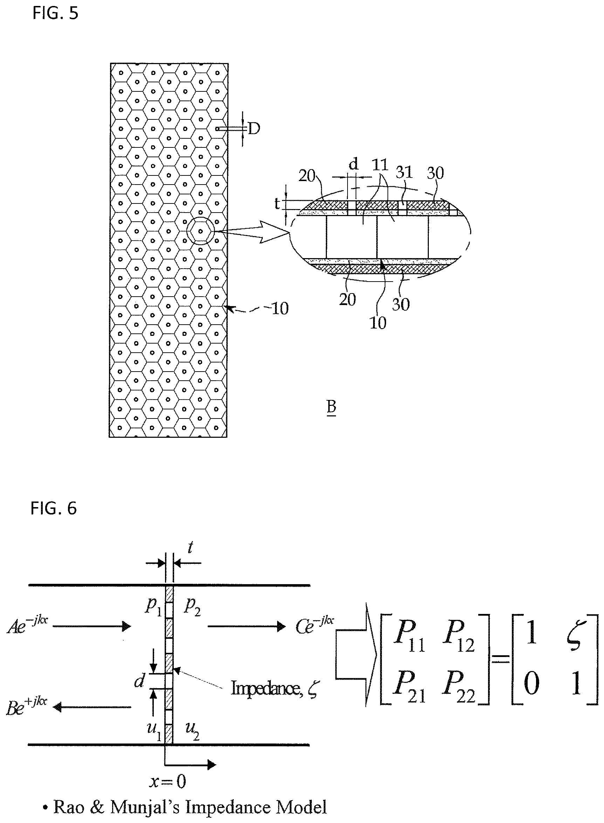

Here, as illustrated in FIG. 6, the inherent acoustic impedance of the perforation 31 may be obtained by Equation 1 based on Rao & Munjal's impedance model.

$$\underline{\text{Equation 1}}$$

$$\zeta = (R + jX)/\sigma$$

$$R = 7.337 \times 10^{-3}(1 + 72.23M)$$

$$X = 2.2245 \times 10^{-5} f(1 + 51t)(1 + 204d)$$

Here, $\zeta$ denotes an impedance, R denotes a real part of the impedance, X denotes an imaginary part of the impedance, M denotes the Mach number, $\sigma$ denotes the porosity, t denotes the thickness (the thickness of the polyurethane sheet) of the perforation, and d denotes the diameter of the perforation.

Here, as described above, the sound absorption coefficient using the inherent acoustic impedance $\zeta$ of the perforation 31 is calculated by repeatedly inputting at least a different diameter d among the thickness t of the polyurethane sheet 30 and the diameter d of the perforation 31. This is, for example, for forming only the perforation 31 having the diameter d of 1 mm in the polyurethane sheet 30 having a constant thickness t of 8 mm, for forming perforations 31 having diameters d of 1 mm and 1.5 mm, or forming the perforation 31 having a different larger diameter d. Thus, when the sound absorption coefficient obtained while changing the diameter d can produce the sound absorption effect in the above-described frequency band, the perforation 31 having this diameter d should be marked in a design process such that the perforation 31 may be processed in the polyurethane sheet 30.

Further, as illustrated in FIG. 5, the perforation 31 is formed in the surface of one of the polyurethane sheets 30 formed on both sides based on the honeycomb 10. The perforation 31 is formed to pass through the polyurethane sheet 30, and at least one perforation 31 is formed to communicate with the above-described cell 11. This is for sometimes forming at least one perforation 31 in one cell 11 since even in a space having the same porosity, the sound absorption performance becomes more excellent as the number of fine perforations becomes larger. When the incident sound entering the perforation 31 passes through an edge (neck) of the perforation 31, the perforation 31 causes the incident sound energy to be dissipated into the thermal energy due to friction, thereby achieving the sound absorption effect.

Meanwhile, as illustrated in FIG. 5, the polyurethane sheets 30 are formed by foaming on both sides of the above-described honeycomb 10, preferably, by foaming in a spraying method, and in this case, the sound absorption performance varies depending on the thickness t. Accordingly, the present disclosure is designed such that the range of the thickness t of the polyurethane sheet 30 is determined in advance, and the polyurethane sheet 30 is manufactured with a selected value within the range.

In this case, as illustrated in FIG. 5, the polyurethane sheets 30 are formed by foam-molding on surfaces of the glass fiber mats 20 integrally laminated on both sides of the above-described honeycomb 10, the surfaces being exposed to the outside. Here, the glass fiber mats 20 are formed in a long fiber state by melting glass in a platinum furnace and dropping the melted glass into a small hole and are made of, in a mat shape, glass fibers which are well known to be used as insulators, air filter media, electrical insulation materials, and sound absorbing materials because the glass fibers have excellent heat resistance, excellent durability, excellent sound absorption, and excellent electrical insulation. It is most preferable that the glass fiber mats 20 having a surface density of 150 $g/m^2$ to 1,500 $g/m^2$ are used.

Meanwhile, in the exemplary embodiments of the present disclosure, it is preferable that the perforations 31 are formed in a desired number in a desired position by using a laser, a roller or press equipped with several needles, or a needle equipped with a servo or cylinder when the sound absorbing board B according to the present disclosure is manufactured.

Further, in the exemplary embodiments of the present disclosure, it is preferable that the polyurethane sheet 30 having the surface density of 150 $g/m^2$ to 1,500 $g/m^2$ is used so that a sound absorbing board B that is lightweight and has maximized sound absorption performance is manufactured.

E. Fifth step

A fifth step is a step of marking and processing the perforation 31 in the polyurethane sheet 30 based on the above-described sound absorption coefficient obtained in the fourth step, as illustrated in FIGS. 3 and 5. In this case, in the position marking of the perforation 31, the position of the perforation 31 having a diameter d at which the sound absorption performance is high in the frequency band set in the above-described first step is marked. With regard to the diameter d of the perforation 31, as described above, one kind of perforation 31 having the same diameter d may be formed or two kinds of perforations 31 having different diameters d may be formed, depending on the frequency band, the thickness t of the polyurethane sheet 30, and the layer configuration of the sound absorbing board B. FIG. 5 illustrates an example where one perforation 31 having the same diameter d is formed at the center of each cell 11.

As described above, in the present disclosure, the sound absorption coefficient is calculated in advance using the variables such as the diameter of the perforation, the thickness of the polyurethane sheet, and the porosity, and the diameter and the thickness of the perforation are determined such that this sound absorption coefficient can increase the sound absorption efficiency in a predetermined frequency band. Thus, the sound absorbing board having optimal sound absorption performance can be designed.

Sound absorbing board using honeycomb

The present disclosure includes a sound absorbing board manufactured based on the sound absorption performance obtained by the above-described method of manufacturing a sound absorbing board using a honeycomb. In this case, the sound absorbing board is manufactured with a variable value having the most excellent sound absorption performance in the predetermined frequency band. Further, it is preferable that such a sound absorbing board is used as a luggage board for a vehicle.

Meanwhile, a result of calculating the performance and the sound absorption coefficient for the sound absorbing board manufactured in this way will be described below.

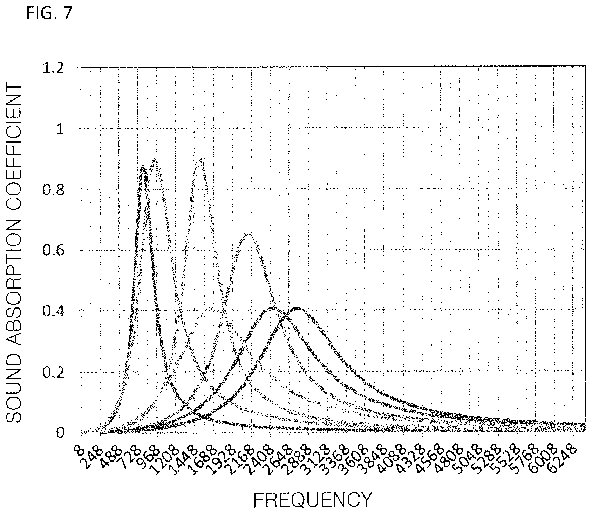

FIG. 7 is a graph illustrating a result of calculating the sound absorption coefficient through input of a variable using the method of manufacturing a sound absorbing board using a honeycomb according to the present disclosure, wherein a horizontal axis represents a frequency (Hz) and a vertical axis represents the sound absorption coefficient.

Further, the graph in FIG. 7 illustrates that the sound absorption coefficient varies depending on the variable used in design.

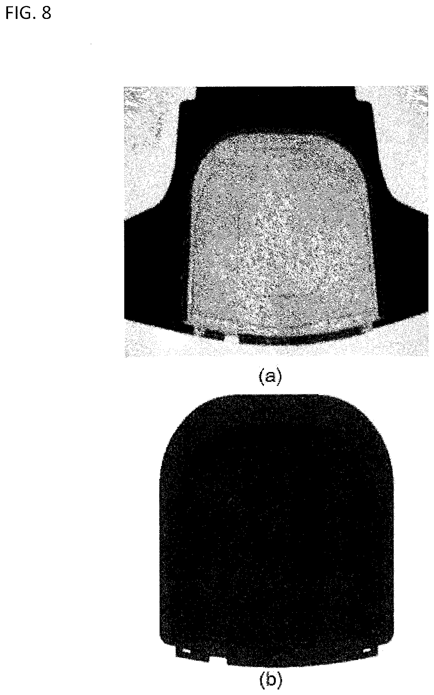

FIGs. 8 to 10 illustrate a result of comparing the sound absorption coefficients of three types of luggage boards having different thicknesses according to a frequency change. FIG. 8A illustrates a luggage board. Further, FIG. 8B is an enlarged image of a bright part of the center of the luggage board of FIG. 8A, wherein the thickness of an edge was 5 mm, the thickness of a small square part in the center was 6 mm, and the thickness of the remaining part was 8 mm. In this case, the part having the thickness of 5 mm was not perforated, and the part having the thickness of 6 mm and the part having the thickness of 8 mm were perforated with diameters of 1 mm and 1.5 mm, respectively.

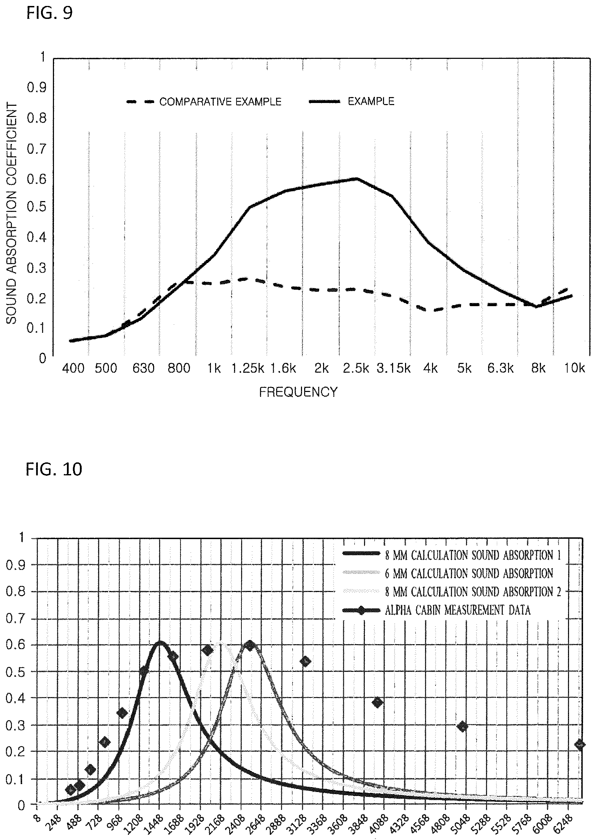

FIG. 9 is a graph illustrating the comparison between the sound absorption coefficients according to the example in which the actually used luggage board manufactured to have the thicknesses of 5 mm, 6 mm, and 8 mm is perforated as in FIG. 8 and a comparative example in which the luggage board is not perforated, wherein a horizontal axis represents the frequency, a vertical axis represents the sound absorption coefficient, a solid line represents a graph of the sound absorption coefficient according to the embodiment, and a dotted line represents a graph of the sound absorption coefficient according to the comparative example. As shown in FIG. 9, it can be seen that the sound absorption coefficient according to the embodiment is higher than that according to the comparative example in a specific frequency range of about 1 kHz to 8 kHz. This means that, by setting the frequency band, the sound absorption coefficient can be improved in the corresponding frequency band.

FIG. 10 is a graph obtained by measuring the sound absorption coefficient of the luggage board as in FIG. 8 according to the frequency change and is a graph illustrating a comparison between an actual vehicle test and the sound absorption coefficient obtained by applying three peaks using the perforations having the diameters of 1 mm and 1.5 mm for the parts having the thickness of 6 mm and the thickness of 8 mm. Here, a horizontal axis represents the frequency, a vertical axis represents the sound absorption coefficient, dots marked in light blue corresponds to a graph of the sound absorption coefficient directly detected using sound absorption coefficient measurement equipment (Alpha Cabin), a red line graph and a light green line graph are obtained by theoretically calculating the sound absorption coefficient, wherein the thickness was 8 mm, and a pink line graph was obtained by theoretically calculating the sound absorption coefficient, wherein the perforation had the thickness of 6 mm. As a result, as shown in FIG. 10, it can be seen that the theoretically calculated sound absorption coefficient and the actually measured sound absorption coefficient are substantially similar in the intended frequency range.

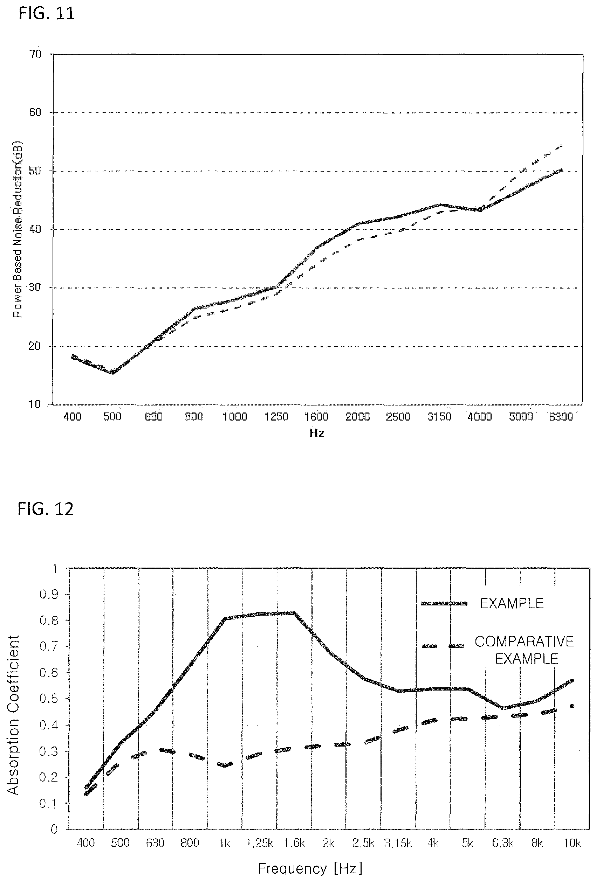

FIG. 11 illustrates a result a result of an actual vehicle test in a state in which the perforated luggage board according to the example and the non-perforated luggage board according the comparative example are actually mounted in a vehicle. In this case, a horizontal axis represents a frequency (Hz), a vertical axis represents a power based noise reduction (PBNR) (dB), a dotted line represents a graph according to the comparative example, and a solid line represents a graph according to the embodiment. In this case, an excitation point was set as a volume source (Q-SOURCE) in the trunk, and a measurement position was the center of a rear seat. As a result, as in FIG. 11, it can be seen that the PBNR is improved by 1-3 dB at 800-2,500 Hz.

FIG. 12 is a graph obtained by comparing the sound absorption coefficients according to the presence or absence of the perforation in a state in which the perforated luggage board according to the example and the non-perforated luggage board according to the comparative example are manufactured to have the same thickness of 17 mm. Here, a horizontal axis represents the frequency (Hz), a vertical axis represents the sound absorption coefficient, a solid line represents the embodiment, and a dotted line represents the comparative example. As a result, it can be seen that the sound absorption coefficient of the luggage board perforated through optimum perforation design according to the embodiment was improved by 100% or more in an intended section.

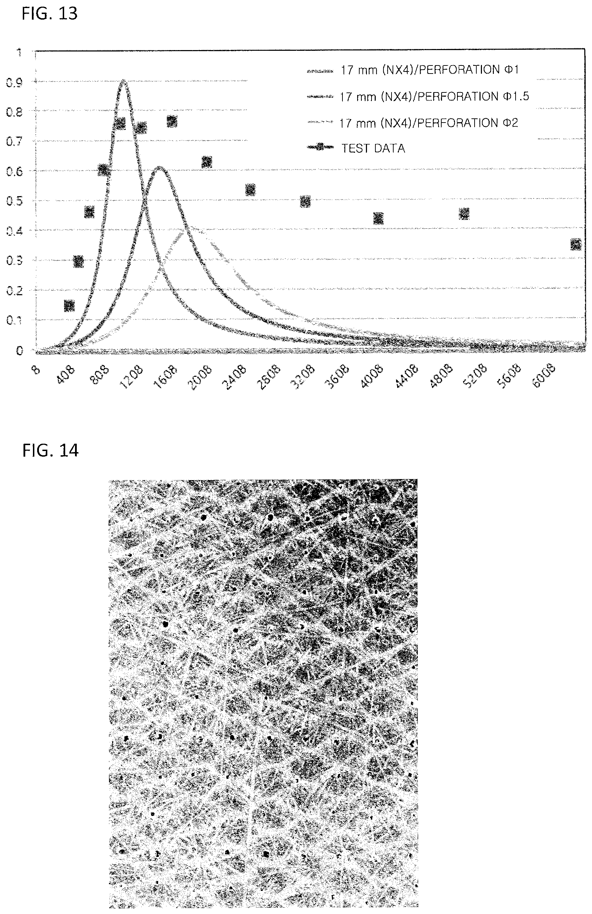

FIG. 13 is a graph obtained by measuring the sound absorption coefficient in a state in which the perforated luggage board according to the example and the non-perforated luggage board according to the comparative example have the same thickness (17 mm), but the diameters of the perforations are different from each other. Here, a horizontal axis represents the frequency (Hz), a vertical axis represents the sound absorption coefficient, a dotted line represents the actually measured sound absorption coefficient, a blue line represents an example where the luggage board was perforated with a diameter of 1 mm, a light red line represents an example where the luggage board was perforated with a diameter of 0.5 mm, and a green line represents an example where the luggage board was perforated with a diameter of 2 mm. As a result, it can be seen that the sound absorption coefficient obtained through the theoretical perforation calculation and the actual sound absorption result are similar to each other in the intended frequency section.

FIG. 14 is a picture illustrating the sound absorbing board manufactured according to the present disclosure. In this picture, a small perforation had a diameter of 1 mm and a large perforation had a diameter of 1.5 mm.

The method of manufacturing a sound absorbing board using a honeycomb and the sound absorbing board using a honeycomb manufactured using the same according to the present disclosure have the following effects.

(1) Since the perforations are formed in a surface of one of the polyurethane sheets formed on both sides of the honeycomb, a frequency in a specific band can be removed through the perforations, and thus the sound absorption performance can be further improved.

(2) In particular, in a design step, the sound absorbing board is designed such that perforations having different diameters can be formed to absorb a sound having the frequency in the specific band, and thus the thickness of the entire sound absorbing board can be made small even while such sound absorption performance can be improved.

(3) In this case, since the perforations having different diameters are formed to pass through the one polyurethane sheet, the perforations having different diameters absorb sound having different frequencies, and thus the sound absorption performance for the frequency in the specific band can be further improved.

(4) Accordingly, since the sound absorbing board according to the present disclosure does not need an additional separate sound absorbing material, the thickness is reduced even while manufacturing costs of the sound absorbing board are reduced to that extent, and thus the exterior of the sound absorbing board and the limited space in the interior of a vehicle can be widely used.

(5) Since the sound absorbing board is designed in advance according to a sound absorbing frequency band that varies depending on the vehicle model and is thus configured to obtain the optimal sound absorbing performance, when there is a need to change the frequency band or the sound absorption performance due to a change of the design of the vehicle or the like, an optimal sound absorbing board that meets a changed design condition can be easily designed and manufactured through design change.

**Claims**

1. A method of manufacturing a sound absorbing board using a honeycomb (10) in which the sound absorbing board is formed by laminating glass fiber mats (20) on both surfaces of the honeycomb (10) and foam-molding polyurethane sheets (30) on surfaces, which are exposed to the outside, of the glass fiber mats (20), the method comprising:

a first step of setting a frequency band for sound absorption performance;
a second step of setting a cell size (S) and a thickness (T) of the honeycomb (10);
a third step of setting a range of a thickness (t) of the polyurethane sheets (30), a range of a diameter (d) of perforations (31) to be formed in the polyurethane sheets (30), and a porosity of the perforations (31);
a fourth step of obtaining a plurality of sound absorption coefficients according to a frequency change by calculating a respective inherent acoustic impedance of the perforations (31) using the following Equation 1:

$$\zeta = (R + jX)/\sigma$$

$$R = 7.337 \times 10^{-3}(1 + 72.23M)$$

$$X = 2.2245 \times 10^{-5} f(1 + 51t)(1 + 204d)$$

Where $\zeta$ denotes the inherent acoustic impedance, R denotes a real part of the impedance, X denotes an imaginary part of the impedance, M denotes a Mach number, $\sigma$ denotes the porosity of the perforations, t denotes a thickness of the polyurethane sheets and thus of the perforations, and d denotes the diameter of the perforations,
while, in order to obtain said plurality of sound absorption coefficients, at least one of the following variables: the thickness (t) of the polyurethane sheets (30) and the diameter (d) of the perforations (31), is input differently in the respective range set in the third step; and
a fifth step of marking positions of the perforations (31) on at least one of the polyurethane sheets (30) with at least one diameter (d) of the perforations (31) at which the sound absorption coefficient is high in the frequency band set in the first step among sound absorption coefficients obtained in the fourth step.

2. The method of claim 1, wherein the honeycomb (10) is made of paper, aluminum, or synthetic resin.

3. The method of claim 1, wherein the cell size (S) is in a range of 5 mm to 15 mm.

4. The method of claim 1, wherein the glass fiber mats (20) have a surface density of 150 g/m$^2$ to 1,500 g/m$^2$.

5. The method of claim 1, wherein the polyurethane sheets (30) have a surface density of 150 g/m$^2$ to 1,500 g/m$^2$.

6. The method of claim 1, wherein the diameter of the perforations (31) is in a range of 0.2 mm to 4 mm.

7. The method of claim 1, wherein an interval between the perforations (31) is the same as the cell size (S).

8. The method of manufacturing a sound absorbing board using a honeycomb of any one of claims 1 to 7, including perforating the at least one polyurethane sheet (30) to form perforations with a marked diameter of the perforations (31) according to the marking of the fifth step.

9. The method of manufacturing a sound absorbing board of claim 8, wherein the perforations (31) are formed using a laser, a roller or press equipped with several needles, or a needle equipped with a servo or cylinder.

10. The method of manufacturing a sound absorbing board of any claim 1 to 8, wherein the sound absorbing board with a honeycomb is a luggage board for a vehicle.

**Patentansprüche**

1. Ein Verfahren zum Herstellen einer Schallabsorptionsplatte unter Verwendung einer Wabe (10), bei dem die Schallabsorptionsplatte durch Laminieren von Glasfasermatten (20) auf beiden Oberflächen der Wabe (10) und Aufschäumen von Polyurethanplatten (30) auf den nach außen gerichteten Oberflächen der Glasfasermatten (20) gebildet wird, wobei das Verfahren umfasst:

   einen ersten Schritt zum Festlegen eines Frequenzbandes für die Schallabsorptionsleistung;
   einen zweiten Schritt zum Festlegen einer Zellgröße (S) und einer Dicke (T) der Wabe (10);
   einen dritten Schritt zum Festlegen eines Bereichs einer Dicke (t) der Polyurethanplatten (30), eines Bereichs eines Durchmessers (d) der in den Polyurethanplatten (30) auszubildenden Perforationen (31) und einer Porosität der Perforationen (31);
   einen vierten Schritt zum Erhalten einer Vielzahl von Schallabsorptionskoeffizienten entsprechend einer Frequenzänderung durch Berechnen einer jeweiligen inhärenten akustischen Impedanz der Perforationen (31) unter Verwendung der folgenden Gleichung 1:

$$\zeta = (R + jX)/\sigma$$

$$R = 7{,}337 \times 10^{-3}\,(1 + 72{,}23M)$$

$$X = 2{,}2245 \times 10^{-5}\,f(1 + 51t)(1 + 204d)$$

   Dabei bezeichnet $\zeta$ die inhärente akustische Impedanz, R den Realteil der Impedanz, X den Imaginärteil der Impedanz, M die Mach-Zahl, $\sigma$ die Porosität der Perforationen, t die Dicke der Polyurethanfolien und damit der Perforationen und d den Durchmesser der Perforationen,
   wobei zum Erhalten der Vielzahl von Schallabsorptionskoeffizienten mindestens eine der folgenden Variablen: die Dicke (t) der Polyurethanplatten (30) und der Durchmesser (d) der Perforationen (31) unterschiedlich in dem jeweiligen im dritten Schritt festgelegten Bereich eingegeben wird; und
   einen fünften Schritt des Markierens von Positionen der Perforationen (31) auf mindestens einer der Polyurethanplatten (30) mit mindestens einem Durchmesser (d) der Perforationen (31), bei dem der Schallabsorptionskoeffizient in dem im ersten Schritt eingestellten Frequenzband unter den im vierten Schritt ermittelten Schallabsorptionskoeffizienten hoch ist.

2. Verfahren nach Anspruch 1, wobei die Wabe (10) aus Papier, Aluminium oder Kunstharz besteht.

3. Verfahren nach Anspruch 1, wobei die Zellgröße (S) in einem Bereich von 5 mm bis 15 mm liegt.

4. Verfahren nach Anspruch 1, wobei die Glasfasermatten (20) eine Flächendichte von 150 g/m$^2$ bis 1.500 g/m$^2$ aufweisen.

**5.** Verfahren nach Anspruch 1, wobei die Polyurethanfolien (30) eine Oberflächendichte von 150 g/m$^2$ bis 1.500 g/m$^2$ aufweisen.

**6.** Verfahren nach Anspruch 1, wobei der Durchmesser der Perforationen (31) im Bereich von 0,2 mm bis 4 mm liegt.

**7.** Verfahren nach Anspruch 1, wobei ein Abstand zwischen den Perforationen (31) der Zellengröße (S) entspricht.

**8.** Verfahren zur Herstellung einer schallabsorbierenden Platte unter Verwendung einer Wabe nach einem der Ansprüche 1 bis 7, das das Perforieren der mindestens einen Polyurethanplatte (30) einschließt, um Perforationen mit einem markierten Durchmesser der Perforationen (31) entsprechend der Markierung des fünften Schrittes zu bilden.

**9.** Verfahren zur Herstellung einer schallabsorbierenden Platte nach Anspruch 8, bei dem die Perforationen (31) mit einem Laser, einer mit mehreren Nadeln ausgestatteten Walze oder Presse oder einer mit einem Servo oder Zylinder ausgestatteten Nadel geformt werden.

**10.** Verfahren zur Herstellung einer schallabsorbierenden Platte nach einem der Ansprüche 1 bis 8, wobei die schallabsorbierende Platte mit einer Wabe eine Gepäckplatte für ein Fahrzeug ist.

**Revendications**

**1.** Procédé de fabrication d'un panneau d'absorption acoustique utilisant un nid d'abeille (10) dans lequel le panneau d'absorption acoustique est formé en laminant des mats de fibre de verre (20) sur les deux surfaces du nid d'abeille (10) et en moulant par mousse des feuilles de polyuréthane (30) sur les surfaces, qui sont exposées à l'extérieur, des mats de fibre de verre (20), le procédé comprenant :

une première étape consistant à fixer une bande de fréquence pour l'absorption acoustique ;
une deuxième étape consistant à définir la taille des cellules (S) et l'épaisseur (T) du nid d'abeilles (10) ;
une troisième étape consistant à définir une plage d'épaisseur (t) des feuilles de polyuréthane (30), une plage de diamètre (d) des perforations (31) à former dans les feuilles de polyuréthane (30), et une porosité des perforations (31) ;
une quatrième étape consistant à obtenir une pluralité de coefficients d'absorption acoustique en fonction d'un changement de fréquence en calculant une impédance acoustique inhérente respective des perforations (31) à l'aide de l'équation 1 suivante :

$$\zeta = (R + jX)/\sigma$$

$$R = 7{,}337 \times 10^{-3} (1 + 72{,}23M)$$

$$X = 2{,}2245 \times 10^{-5} \, f \, (1 + 51t)(1 + 204 \, d)$$

Où $\zeta$ désigne l'impédance acoustique inhérente, R désigne une partie réelle de l'impédance, X désigne une partie imaginaire de l'impédance, M désigne un nombre de Mach, $\sigma$ désigne la porosité des perforations, t désigne une épaisseur des feuilles de polyuréthane et donc des perforations, et d désigne le diamètre des perforations,
tandis que, pour obtenir ladite pluralité de coefficients d'absorption acoustique, au moins l'une des variables suivantes : l'épaisseur (t) des feuilles de polyuréthane (30) et le diamètre (d) des perforations (31), est introduite différemment dans la plage respective fixée à la troisième étape ; et
une cinquième étape consistant à marquer les positions des perforations (31) sur au moins une des feuilles de polyuréthane (30) avec au moins un diamètre (d) des perforations (31) pour lequel le coefficient d'absorption acoustique est élevé dans la bande de fréquences définie lors de la première étape parmi les coefficients d'absorption acoustique obtenus lors de la quatrième étape.

**2.** Procédé de la revendication 1, dans lequel le nid d'abeille (10) est fait de papier, d'aluminium ou de résine synthétique.

**3.** Procédé de la revendication 1, dans lequel la taille des cellules (S) est comprise dans une plage allant de 5 mm à 15 mm.

4. Procédé de la revendication 1, dans lequel les mats de fibres de verre (20) ont une densité de surface de 150 g/m$^2$ à 1 500 g/m$^2$.

5. Procédé de la revendication 1, dans lequel les feuilles de polyuréthane (30) ont une densité de surface de 150 g/m$^2$ à 1 500 g/m$^2$.

6. Procédé de la revendication 1, dans lequel le diamètre des perforations (31) est compris dans une plage allant de 0,2 mm à 4 mm.

7. Procédé de la revendication 1, dans lequel l'intervalle entre les perforations (31) est identique à la taille de la cellule (S).

8. Procédé de fabrication d'un panneau insonorisant utilisant un nid d'abeille de l'une quelconque des revendications 1 à 7, comprenant la perforation de l'au moins une feuille de polyuréthane (30) pour former des perforations avec un diamètre marqué des perforations (31) selon le marquage de la cinquième étape.

9. Procédé de fabrication d'un panneau absorbant acoustique selon la revendication 8, dans lequel les perforations (31) sont formées à l'aide d'un laser, d'un rouleau ou d'une presse équipée de plusieurs aiguilles, ou d'une aiguille équipée d'un servo ou d'un cylindre.

10. Procédé de fabrication d'un panneau d'absorption acoustique selon l'une des revendications 1 à 8, dans lequel le panneau d'absorption acoustique en nid d'abeille est un panneau de bagages pour un véhicule.

FIG. 1

B

FIG. 2

FIG. 3

SET FREQUENCY ──── PREDETERMINED
                               FREQUENCY BAND

SET HONEYCOMB ──┤ CELL SIZE
                               THICKNESS OF CELL

SET VARIABLE ──┤ POROSITY
                         THICKNESS
                            OF POLYURETHANE SHEET
                         DIAMETER OF PERFORATION

CALCULATE
SOUND ABSORPTION ──┤ CHANGE THICKNESS
COEFFICIENT                  OF POLYURETHANE SHEET
                           CHANGE DIAMETER
                            OF PERFORATION

MARK POSITION
OF PERFORATION

STORE AND
OUTPUT RESULT

FIG. 4

(a)

(b)

FIG. 5

$\underline{B}$

FIG. 6

$$\begin{bmatrix} P_{11} & P_{12} \\ P_{21} & P_{22} \end{bmatrix} = \begin{bmatrix} 1 & \zeta \\ 0 & 1 \end{bmatrix}$$

• Rao & Munjal's Impedance Model

FIG. 7

FIG. 8

(a)

(b)

FIG. 9

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017225425 A1
- KR 20180107424
- KR 1020170093423
- KR 101952485
- KR 102073212